# EUROPEAN PATENT SPECIFICATION

(11) **EP 2 063 031 B1**
(45) Date of publication and mention of the grant of the patent: **26.09.2012**
(21) Application number: 08104242.6
(22) Date of filing: 03.06.2008
(51) Int. Cl.: E03C 1/04, F16K 11/078, F16K 27/04

(54) **A water faucet**
Wasserhahn
Robinet d'eau

(30) Priority: 22.11.2007 TR 200708073 U
(43) Date of publication of application: 27.05.2009
(73) Proprietor: Valfsel Armatur Sanayi Anonim Sirketi, 45030 Manisa (TR)
(72) Inventor: Zeren, Muzaffer, 45030 MANISA (TR); Cosan, Ahmet, 45030 MANISA (TR); Buyukdogan, Erdal, 45030 MANISA (TR); Gezer, Mahsube, 45030 MANISA (TR)
(74) Representative: Dericioglu, Ekin

(56) References cited:
- WO-A-96/29530
- WO-A-2004/059197
- DE-U1- 9 410 871
- US-B1- 6 394 133

## Description

### Field of the Invention

The present invention relates to a water faucet which mixes hot and cold water.

Prior art water faucet according the preamble of claim 1 is known for instance from WO 96/29530.

### Background of the Invention

In current applications, in faucets which allow mixing of hot and cold water, the mixing ratio is adjusted by means of the handle. People who use faucets wherein the mixing ratio is adjusted as thus have to adjust the temperature and amount of the water at the same time. This situation causes difficulty in use and failure to perform temperature adjustment as desired. Several solutions have been developed to prevent these drawbacks.

The Turkish Utility Model document No. TR200601128, within another state of the art, discloses a water faucet realized to prevent the above described drawbacks. In the said document, there is seen an inner body which allows temperature adjustment to be made independently and an adjustment rod which allows the inner body to be brought to the desired position. Although the water faucet described in the said document has overcome the above mentioned drawbacks, it comprises two separate handles and this makes use difficult.

### Summary of the Invention

The objective of the present invention is to realize a water faucet which allows hot water cold water mixing ratio to be adjusted conveniently and as desired.

### Detailed Description of the Invention

For achieving the above mentioned object there is provided a faucet as defined in claim 1. Reference now is made to the accompanying drawings in which:

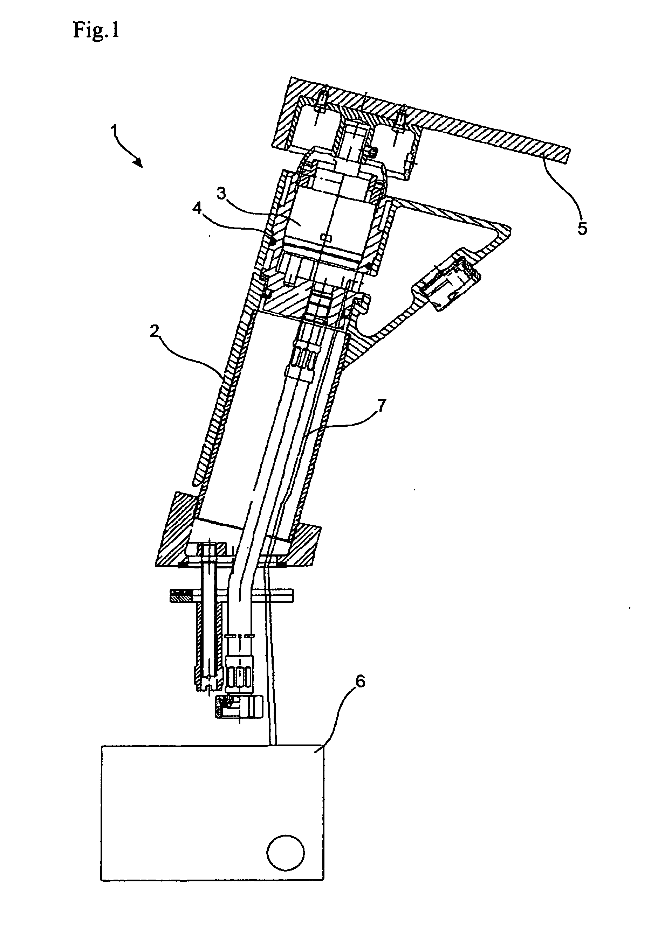

Figure 1 is the cross-sectional view of the water faucet.

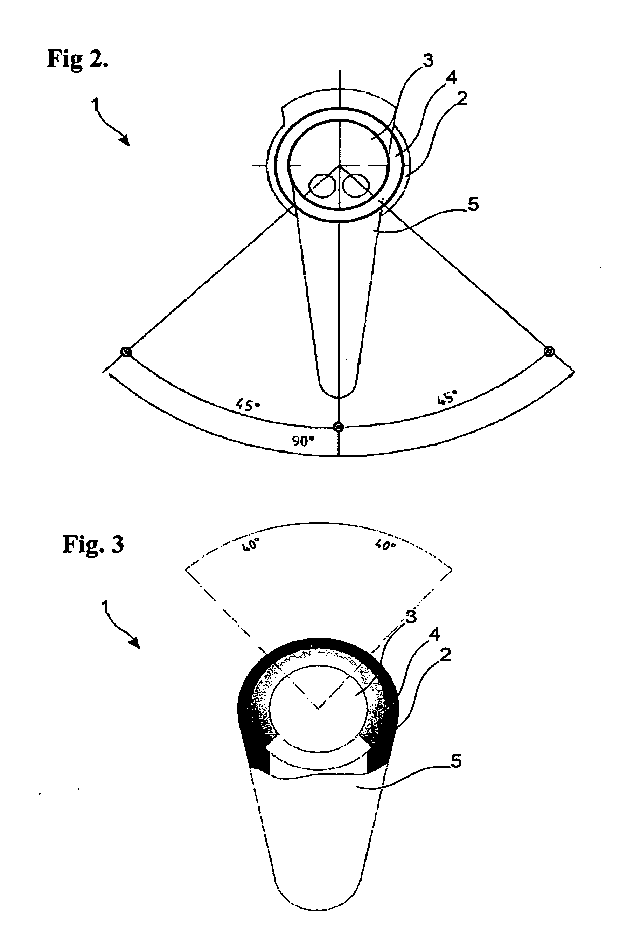

Figure 2 is the top view of the water faucet with the handle in the middle position and the hot and cold water mixing ratio 50%-50%.
Figure 3 is the top partial sectional view of the water faucet.
Figure 4 is the top view of the water faucet with the handle in the middle position and the cold water ratio is 95%.
Figure 5 is the top view of the water faucet with the handle in the middle position and the hot water ratio 95%.

The components shown in the figures are as follows:
1. Faucet
2. Body
3. Cartridge
4. Inner body
5. Handle
6. Controller
7. Thermocouple

The faucet (1)
comprises a body (2) accommodating the parts of the faucet (1),
a cartridge (3) which enables mixing of the hot and cold water,
an inner body (4) which accommodates the cartridge (3) and enables rotation of the same,
a handle (5) which adjusts the water amount, adjusts the ratio of hot and cold water by rotating the cartridge (3) and performs a preliminary adjustment to the hot and cold water ratio of the water mixture by rotating the inner body (4).

The handle's (5) functions of rotating the cartridge (3) and the inner body (4) require exertion of forces of different sizes. This difference enables separation of the said functions from each other.

In standard faucets, when the water is turned on while the handle (5) is in the middle position, 50% - 50% hot and cold water mix ratio is obtained. Upon rotating the handle (5) the cartridge (3) also rotates and the mix ratio of the water changes.

In the inventive water faucet (1), 50% - 50% hot and cold water mix ratio is obtained at the initial turning on of the handle (5) like in the standard faucets. Again like in the standard faucets, hot water is obtained upon rotating the handle (5) 45° clockwise or cold water is attained upon rotating it 45° counterclockwise (Figure - 2).

The cartridge (3) is arranged within a second body (4) in the body (2). The inner body (4) can be rotated within the range of ±40° by rotating the handle beyond the standard range of ±45° (Figure - 3).

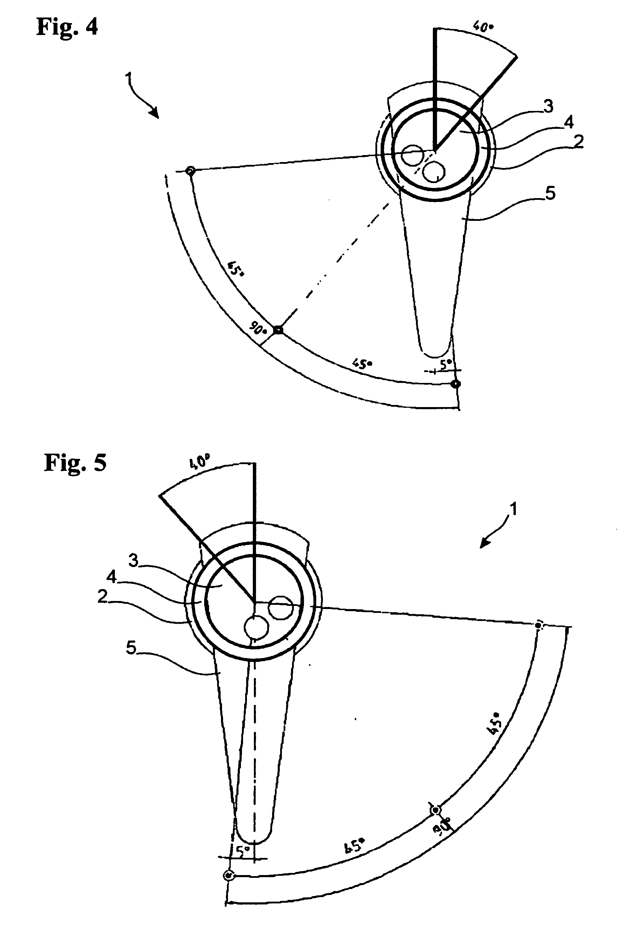

In the inventive faucet (1), after rotating the handle (5) which is in the middle position, by 45° clockwise, and then by rotating it for an additional 40° in the same direction, the inner body (4) also rotates and it is brought to the cold water setting. After that, if the faucet is turned on by bringing the handle (5) to the middle position, a mixture with 95% cold water will be obtained (Figure 4).

After rotating the handle (5) which is in the middle position, by 45° counterclockwise, and then by rotating it for an additional 40° in the same direction, the inner body (4) also rotates and it is brought to the hot water setting. After that, if the faucet is turned on by bringing the handle (5) to the middle position, a mixture with 95% hot water will be obtained (Figure 5).

In one embodiment of the invention, in order to avoid the danger of scalding when the faucet (1) is adjusted to hot water, a sound alarm system is realized. A thermocouple (7) positioned to the inner body (4) transmits the information related to the temperature of the mix water to the controller (6) arranged at the bottom of the faucet (1). The controller (6), which includes special software that reads the transmitted value, gives a sound alarm if the measured value is greater than a certain temperature.

## Claims

1. A water faucet (1) **comprising** a body (2) accommodating the parts of the faucet (1); a cartridge (3) which enables to mix hot and cold water; an inner body (4) which accommodates the cartridge (3) and enables rotation of the same;
a handle (5) which adjusts the water amount, adjusts the ratio of hot and cold water by rotating the cartridge (3) and performs a preliminary adjustment of the hot and cold water ratio of the water mixture by rotating the inner body (4); **characterized by** an inner body (4) which can be rotated within the range of ±40° by rotating the handle (5) beyond the standard range of ± 45° and by a thermocouple (7) positioned within the inner body (4) and a controller (6) which is provided at the bottom of the faucet (1) and which includes special software that reads the value measured by the thermocouple (7) and gives a sound alarm if the measured value is greater than a certain temperature

## Patentansprüche

1. Eine Wasserarmatur (1), **umfassend** ein Gehäuse (2), welches die Bauteile der genannten Armatur (1) aufnimmt und eine Patrone (3), die die Mischung des Warmwassers mit dem Kaltwasser ermöglicht sowie ein inneres Gehäuse (4), das die Patrone (3) aufnimmt und deren Drehung ermöglicht, einen Einstellhebel, der die Wassermenge sowie das Mischungsverhältnis von Warm-und Kaltwasser durch Drehung der Patrone reguliert und auch bezüglich der Mischwasseranteile der Mischung von Warm-und Kaltwasser eine Voreinstellung durch Drehung des inneren Gehäuses (4) vornimmt, **gekennzeichnet durch** ein inneres Gehäuse (4), welches **durch** Drehung des Einstellhebels (5) über den standarden Bereich hinaus im Bereich von ± 40° gedreht werden kann und **durch** ein Doppelthermoelement (7), das innerhalb des inneren Gehäuses (5) positioniert ist und **durch** einen Regler (6), der am unteren Teil der Wasserarmatur (1) vorgesehen ist und welcher eine bestimmte Software aufweist, die den **durch** das Doppelthermoelement (7) gemessenen Wert abliest und einen akustischen Alarm auslöst, wenn der gemessene Wert gößer als eine bestimmte Temperatur ist.

## Revendications

1. Un robinet d'eau (1), comportant un corps (2) recevant les parts dudit robinet (1), une cartouche (3) permettant de mélanger l'eau froide et chaude, un corps intérieur protégeant la cartouche (3) et assurant le pivotement de cette dernière, une poignée (5) réglant la quantité de l'eau, ajustant le rapport de l'eau chaude et froide en tournant la cartouche (3) et exécutant un rajustement préliminaire du rapport de l'eau chaude et froide en tournant le corps intérieur (4), **caractérisé par** un corps intérieur qui peut être tourné dans la gamme de + 40° en tournant la poignée au-delà de la gamme standard de ±45° et par un thermocouple (7) positionné dans le corps intérieur et un régulateur fourni dans le fond du robinet (1) et comportant un logiciel spécial lisant la valeur mesurée par le thermocouple (7) et sonnant l'alarme si la valeur mesurée est plus d' une certaine température.
